(19) Europäisches Patentamt
European Patent Office
Office européen des brevets

(11) **EP 1 925 799 B1**

(12) **EUROPEAN PATENT SPECIFICATION**

(45) Date of publication and mention
of the grant of the patent:
**19.08.2020 Bulletin 2020/34**

(51) Int Cl.:
*F02D 41/02* (2006.01)   *F02D 41/18* (2006.01)
*F02D 41/40* (2006.01)   *F01N 3/023* (2006.01)

(21) Application number: **07121399.5**

(22) Date of filing: **23.11.2007**

(54) **Exhaust gas purification system for internal combustion engine**

Abgasreinigungssystem für einen Verbrennungsmotor

Système de purification de gaz d'échappement pour moteur à combustion interne

(84) Designated Contracting States:
**DE ES FR IT**

(30) Priority: **27.11.2006 JP 2006318639**

(43) Date of publication of application:
**28.05.2008 Bulletin 2008/22**

(73) Proprietor: **TOYOTA JIDOSHA KABUSHIKI KAISHA**
**Toyota-shi, Aichi-ken, 471-8571 (JP)**

(72) Inventors:
• **Otsubo, Yasuhiko**
**Toyota-shi, Aichi-ken, 471-8571 (JP)**
• **Katayama, Masanobu**
**Toyota-shi, Aichi-ken, 471-8571 (JP)**
• **Yokoi, Tatsuhisa**
**Toyota-shi, Aichi-ken, 471-8571 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Straße 22**
**85354 Freising (DE)**

(56) References cited:
**EP-A1- 1 380 742     EP-A1- 1 437 497**
**FR-A1- 2 874 967     FR-A1- 2 879 254**

**Description**

BACKGROUND OF THE INVENTION

1. Field of the Invention

The present invention relates to an exhaust gas purification system for an internal combustion engine.

2. Description of the Related Art

Some known exhaust gas purification systems for internal combustion engines such as diesel engines for vehicles are provided with a filter for trapping particulate matter (PM) containing soot as a main component in an exhaust system. In such exhaust gas purification systems, PM is deposited on the filter to clog the filter, and as a result may degrade the PM trapping capacity of the filter or may reduce the engine output. The filter is therefore regenerated by burning the PM deposited on the filter to unclog the filter.

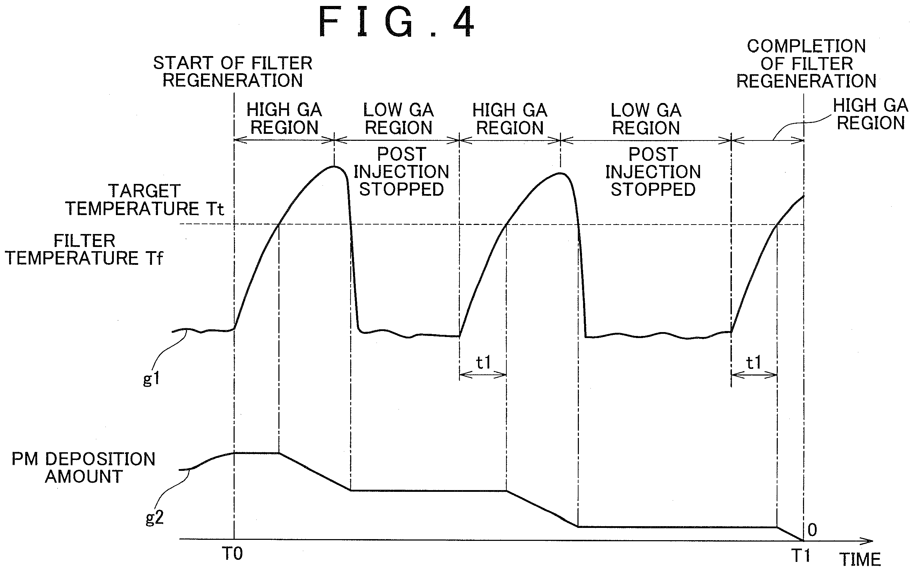

In Japanese Patent Application Publication No. 2004-44403 (JP-A-2004-44403), for example, the filter is regenerated as follows. When the PM deposition amount on the filter reaches a maximum allowable value, post injection is performed, that is, fuel is injected from a fuel injection valve to supply a fuel component to a catalyst in the exhaust system, after main fuel injection is performed, that is, fuel is injected from the fuel injection valve to a combustion chamber for engine operation. As the fuel component is supplied to the catalyst in the exhaust system by the post injection, components such as hydrocarbon (HC) and carbon monoxide (CO) are oxidized in an exhaust gas or on the catalyst. This oxidative reaction generates heat, and thus the filter is exposed to high temperature environments. (See Paragraphs [0024] to [0026] and FIG. 4, for example.) In this way, the PM deposited on the filter is burned to be removed, and the filter is thus unclogged.

Such filter regeneration is terminated by stopping the post injection from the fuel injection valve, and may be terminated when the PM deposition amount on the filter is determined to be substantially "zero," for example.

Some of the fuel injected into the combustion chamber by the post injection is not fed to the exhaust system but adheres to a cylinder inner wall. The amount of such fuel that adheres to the cylinder inner wall has a tendency to become smaller in the engine operation region where the intake air amount is larger, and tends to be larger as the intake air amount is smaller in the engine operation region where the intake air amount is smaller. This is because as the intake air amount into the internal combustion engine is smaller, the temperature of a gas in the combustion chamber is lower, which makes it easier for the fuel injected into the combustion chamber by the post injection to adhere to the cylinder inner wall.

When fuel adheres to the cylinder inner wall, the fuel drops through a gap between the cylinder inner wall and a piston ring to an oil pan during reciprocation of a piston. As a result, the fuel mixes with oil for lubricating the internal combustion engine or the like, and the fuel with its lower viscosity dilutes the oil. Thus, as the amount of fuel that adheres to the cylinder inner wall is larger, that is, in the engine operation region where the intake air amount is smaller, such dilution of the oil by the fuel remarkably reduces the viscosity of the oil, which may hinder various parts of the engine from being sufficiently lubricated by the oil.

Therefore, in the technique disclosed in JP-A-2004-44403, filter regeneration is not performed in the region where the internal combustion engine is under lower loads and at lower speeds, in other words, in the engine operation region where the intake air amount is smaller. In this case, it is prevented that a large amount of fuel injected by the post injection adheres to the cylinder inner wall, and hence that the oil for the internal combustion engine is diluted by the fuel and the viscosity of the oil is reduced, in the engine operation region where the intake air amount is smaller. Therefore, the internal combustion engine can be sufficiently lubricated by the oil.

Refraining from filter regeneration in the engine operation state where the intake air amount is smaller as discussed above, however, causes the completion of filter regeneration to take more time under circumstances where there are frequent shifts of the engine operation region between the region where the intake air amount is larger and the region where the intake air amount is smaller during the filter regeneration.

Under such circumstances, it is conceivable to remove the PM deposited on the filter to complete the filter regeneration as follows. Post injection is stopped to intermit the filter regeneration at a shift to the engine operation region where the intake air amount is smaller, and then started again to resume the filter regeneration at a shift to the engine operation region where the intake air amount is larger. The post injection is repetitively started and stopped until the PM deposition amount on the filter becomes substantially "zero," and the filter regeneration is terminated when the PM deposition amount is determined to be substantially "zero."

Regenerating the filter in this way prevents fuel from adhering to the cylinder inner wall in the engine operation region where the intake air amount is smaller, and thus prevents oil for the internal combustion engine from being diluted by fuel that would otherwise have adhered. At a shift to the engine operation range where the intake air amount is smaller, however, the filter temperature is significantly reduced when the post injection is stopped to intermit the filter regeneration, because a fuel component is no longer supplied to the catalyst by the post injection. Therefore, at a subsequent shift from the engine operation region where the intake air amount is smaller to the region where the intake air amount is larger, when the post injection is started again and the filter regeneration is resumed, it takes more time to increase the filter temperature to a value required to reduce the PM deposition amount on the filter. As a result, it takes more time to reduce the PM deposition amount on the filter to substantially "zero" by the filter regeneration, which delays the termination of the filter regeneration.

EP 1 380 742 A1 having patent family member JP 2004-44403 A discloses an exhaust gas purification system having the features of the preamble of claim 1. EP 1 437 497 A1 describes a regeneration apparatus and method for a particulate filter applicable to an engine exhaust purifying device. FR 2 879 254 A1 describes a method for controlling an engine including an oxidation catalytic converter.

SUMMARY OF THE INVENTION

The present invention provides an exhaust gas purification system for an internal combustion engine, having the features of claim 1, in which dilution of oil by fuel is restricted and a delay in the completion of filter regeneration is reduced. Advantageous further developments are set forth in the dependent claims.

The exhaust gas purification system for an internal combustion engine in accordance with a first aspect of the present invention includes a filter provided in an exhaust system of the internal combustion engine to trap particulate matter in an exhaust gas. The purification system performs filter regeneration by performing post injection, which is fuel injection from a fuel injection valve performed after fuel injection from the fuel injection valve to a combustion chamber for engine operation, to supply a fuel component to a catalyst provided in the exhaust system, and burning the particulate matter deposited on the filter to remove the particulate matter utilizing oxidation heat of the fuel component at the catalyst to increase a filter temperature. The exhaust gas purification system for the internal combustion engine further includes correction means for reducing a post injection amount while the post injection is performed when an intake air amount into the internal combustion engine is smaller than a predetermined value during the filter regeneration.

With this configuration, at a shift to the engine operation region where the intake air amount is smaller during filter regeneration, the post injection amount is reduced to reduce the amount of fuel that adheres to the cylinder inner wall, and therefore dilution of oil for the internal combustion engine by the fuel having adhered is restricted. In addition, at a shift to the engine operation region where the intake air amount is smaller during filter regeneration, the post injection is not stopped but only the post injection amount is reduced, and therefore a significant reduction in the filter temperature is restricted. Therefore, under circumstances where there are frequent shifts of the engine operation region between the region where the intake air amount is larger and the region where the intake air amount is smaller during the filter regeneration, the filter temperature is not reduced significantly at a shift to the engine operation region where the intake air amount is smaller. Further, at a subsequent shift to the engine operation region where the intake air amount is larger, it does not take time for the filter temperature to increase to a value required to reduce the PM deposition amount. Thus, it does not take much time to reduce the PM deposition amount on the filter to substantially "zero" by the filter regeneration under the circumstances discussed above, and a delay in the termination of the filter regeneration is reduced.

A feedback correction value, which corrects the post injection amount to bring the filter temperature to a target temperature, is increased and reduced during the filter regeneration, and the correction means reduces the post injection amount by reducing the target temperature.

With this configuration, the post injection amount is corrected using the feedback correction value, which is increased and reduced so as to bring the filter temperature to the target temperature, during the filter regeneration. In the engine operation region where the intake air amount is smaller, the exhaust temperature of the internal combustion engine is lower, and therefore it is more difficult to increase the filter temperature by the post injection. Therefore, when the target temperature is set to be higher, the feedback correction value is set to be larger based on the difference between the target temperature and the filter temperature, which is on the lower side. If the post injection amount is increased by an amount corresponding to the correction value, however, the increase does not contribute to an increase in the filter temperature and the feedback correction value remains larger. However, in the engine operation region where the intake air amount is smaller, the target temperature is reduced compared to that in the other region, and therefore the difference between the target temperature and the filter temperature is smaller and an increase in the feedback correction value is restricted, which prevents the correction value from remaining larger.

The target temperature is calculated based on a base temperature and a reduction correction term, said base temperature being a theoretical value at which the particulate matter deposited on the filter can be burned and wherein the correction means variably sets the reduction correction term such that the target temperature reduces as the intake air amount reduces, when the intake air amount into the internal combustion engine is smaller than the predetermined value.

With this configuration, at a shift to the engine operation region where the intake air amount is smaller during filter regeneration, a reduction in the target temperature is achieved by correcting the target temperature by an amount corresponding to the reduction correction term. The reduction correction term is variably set so as to reduce the target temperature as the intake air amount reduces. Since the exhaust temperature of the internal combustion engine is lower as the intake air amount is smaller, the value of the target temperature at which the filter temperature can be maintained is smaller as the intake air amount is smaller. In addition, since the temperature of a gas in the combustion chamber is lower as the intake air amount is smaller, the amount of fuel injected by the post injection that adheres to the cylinder inner wall is larger as the intake air amount is smaller. Thus, in reducing the target temperature, variably setting the reduction correction term as discussed above can both prevent a reduction in the filter temperature and restrict adhesion of fuel to the cylinder inner wall in the preferable state.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG. 1 is a diagram schematically showing an internal combustion engine to which an exhaust gas purification system of this embodiment is applied and the vicinity thereof;
FIG. 2 is a flowchart showing procedures for calculating a post injection amount;
FIG. 3 is a graph showing changes in the degree of dilution of oil by fuel to changes in the intake air amount;
FIG. 4 is a time chart showing the transition of the filter temperature and the PM deposition amount during filter regeneration;
FIG. 5 is a time chart showing the transition of the filter temperature and the PM deposition amount during filter regeneration;
FIG. 6 is a graph showing changes in the degree of dilution of oil by fuel to changes in the target temperature of the filter temperature;
FIG. 7 is a time chart for explaining the relation between the reduction in the target temperature and the magnitude of the feedback correction value;
FIG. 8 is a flowchart showing procedures for setting the target temperature; and
FIG. 9 is a graph showing changes in the reduction correction term to changes in the intake air amount.

15 DETAILED DESCRIPTION OF EMBODIMENTS

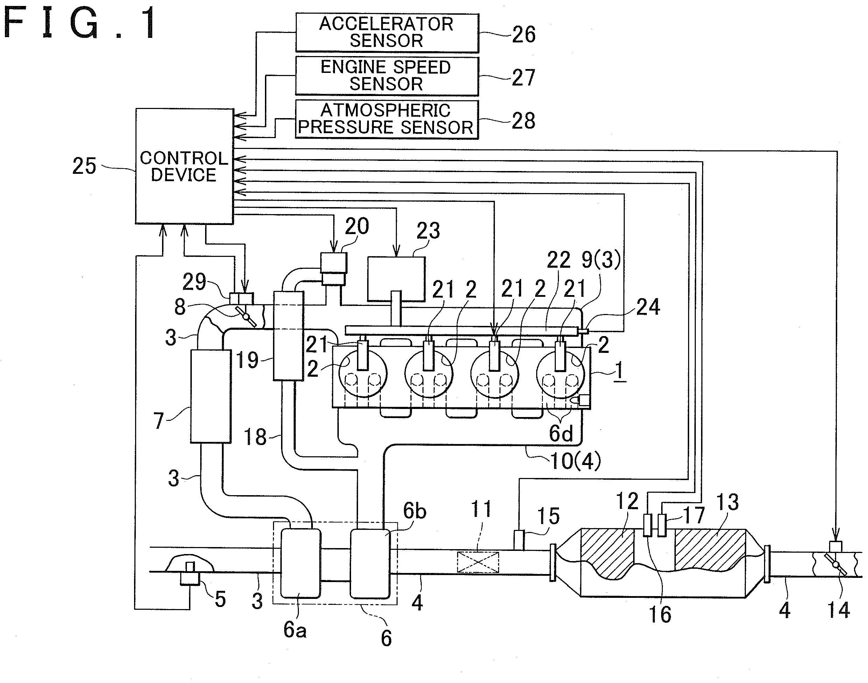

An embodiment of the present invention will hereinafter be described with reference to FIGs. 1 to 9. FIG. 1 shows the configuration of an internal combustion engine 1 to which an exhaust gas purification system of this embodiment is applied. The internal combustion engine 1 is a diesel engine including a common rail fuel injection system and a turbocharger.

An intake passage 3 and an exhaust passage 4 are connected to each combustion chamber 2 of the internal combustion engine 1. An airflow meter 5, a compressor 6a of a turbocharger 6, an intercooler 7 and an intake throttle valve 8 are disposed in the intake passage 3 in this order from the upstream side to the downstream 25 side. The intake passage 3 is branched at an intake manifold 9, which is provided downstream of the intake throttle valve 8, to be connected to each cylinder.

On the other hand, branches of the exhaust passage 4, which are connected to the combustion chamber 2 of each cylinder, are gathered at an exhaust manifold 10 and in the downstream side of which the exhaust passage 4 is connected to an exhaust turbine 6b of the turbocharger 6. A first oxidation catalyst 11, a second oxidation catalyst 12, a filter 13, and an exhaust throttle valve 14 are disposed in a portion of the exhaust passage 4 downstream of the exhaust turbine 6b in this order from the upstream side. The first oxidation catalyst 11 and the second oxidation catalyst 12 purify an exhaust gas by oxidizing hydrocarbon (HC) and carbon monoxide (CO) contained in the exhaust gas. The filter 13 is made of a porous material, and traps particulate matter (PM) contained in the exhaust gas and containing soot as a main component.

A first exhaust temperature sensor 15 for detecting the temperature of an exhaust gas flowing into the second oxidation catalyst 12 and a second exhaust temperature sensor 16 for detecting the temperature of an exhaust gas flowing into the filter 13 are respectively disposed at portions of the exhaust passage 4 upstream and downstream of the second oxidation catalyst 12. In addition, a pressure sensor 17 for detecting the pressure of a portion of the exhaust passage 4 upstream of the filter 13 is disposed at a portion of the exhaust passage 4 between the second oxidation catalyst 12 and the filter 13.

The internal combustion engine 1 is further provided with an exhaust gas recirculation (hereinafter referred to as "EGR") system for recirculating a part of the exhaust gas to the air in the intake passage 3. The EGR system includes an EGR passage 18 for communicating the exhaust passage 4 and the intake passage 3. The most upstream portion of the EGR passage 18 is connected to a portion of the exhaust passage 4 upstream of the exhaust turbine 6b. An EGR cooler 19 for cooling the recirculated exhaust gas and an EGR valve 20 for regulating the flow rate of the exhaust gas are disposed in the EGR passage 18 in this order from the upstream side. The most downstream part of the EGR passage 18 is connected to a portion of the intake passage 3 downstream of the intake throttle valve 8.

A fuel injection valve 21 is disposed in the combustion chamber 2 of each cylinder of the internal combustion engine 1 to inject fuel to be burned in the combustion chamber 2. The fuel injection valve 21 of each cylinder is connected to a common rail 22, to which high-pressure fuel is supplied by a high-pressure pump 23. The pressure of the high-pressure fuel in the common rail 22 is detected by a rail pressure sensor 24 mounted to the common rail 22.

A control device 25 performs various controls for the internal combustion engine 1. The control device 25 includes a CPU for performing various processes in association with engine control, a ROM for storing programs and data required for such control, a RAM for temporarily storing processing results by the CPU and so forth, and input and output ports for receiving and transmitting signals from and to the external devices.

The input ports of the control device 25 are connected to, in addition to the various sensors discussed above, an accelerator sensor 26 for detecting the accelerator operation amount, an engine speed sensor 27 for detecting the engine speed, an atmospheric pressure sensor 28 for detecting the atmospheric pressure, a throttle valve sensor 29 for detecting the opening of the intake throttle valve 8, and so forth. Also, the output ports of the control device 25 are connected to drive circuits for the intake throttle valve 8, the exhaust throttle valve 14, the EGR valve 20, the fuel injection valve 21, the high-pressure pump 23, and so forth.

The control device 25 outputs a command signal to the drive circuits for the various devices connected to the output ports in response to the engine operation state known from a detection signal input from the various sensors. The control device 25 thus performs various controls including opening control for the intake throttle valve 8, opening control for the exhaust throttle valve 14, EGR control based on opening control for the EGR valve 20, fuel injection control for the fuel injection valve 21, discharge pressure control for the high-pressure pump 23, and so forth.

In the internal combustion engine 1 of this embodiment configured as described above, PM deposited on the filter 13 is burned to regenerate the filter 13, in order to prevent the filter 13 from being clogged with the PM. To perform filter regeneration, the filter needs to be sufficiently heated. For this purpose, a fuel component is supplied to the first oxidation catalyst 11 and the second oxidation catalyst 12 to increase the temperature of the filter 13 to a value required to burn the PM (for example, 600 to 700°C) for filter regeneration.

Filter regeneration is started when the PM deposition amount on the filter 13 becomes a maximum allowable value or larger while filter regeneration is not being performed. The PM deposition amount is estimated based on a detection signal from the pressure sensor 17. This is because as the PM deposition amount increases, the pressure detected by the pressure sensor 17 also increases. After the filter regeneration is started, a fuel component is supplied to the first oxidation catalyst 11 and the second oxidation catalyst 12, so that the temperature of the filter 13 is increased, by oxidation heat generated by oxidation of the fuel at the catalysts 11 and 12, to a value required to burn the PM.

Specifically, after main fuel injection is performed, or fuel is injected from the fuel injection valve 21 to the combustion chamber 2 for engine operation, post injection is performed, or fuel is injected from the fuel injection valve 21 to supply a fuel component to the first oxidation catalyst 11 and the second oxidation catalyst 12. The post injection is performed by controlling the drive of the fuel injection valve 21 such that a post injection amount Qp, which is calculated based on the engine operation state, of fuel is injected from the fuel injection valve 21 after the main fuel injection.

The fuel injected from the fuel injection valve 21 by the post injection is fed to the exhaust passage 4 to reach the first oxidation catalyst 11. As the fuel component reaches the first oxidation catalyst 11, components such as hydrocarbon (HC) and carbon monoxide (CO) are oxidized in an exhaust gas or on the catalyst. This oxidative reaction generates heat, which increases the exhaust temperature. The increase in the exhaust temperature in turn increases the temperature of the second oxidation catalyst 12, which promotes activation of the second oxidation catalyst 12. If a fuel component having passed through but not oxidized at the first oxidation catalyst 11 reaches the second oxidation catalyst 12, the fuel component is oxidized at the second oxidation catalyst 12, which also generates heat to increase the exhaust temperature. As the exhaust gas with its temperature increased as described above flows into the filter 13, the temperature of the filter 13 is increased to a value at which the PM can be burned.

After the filter regeneration is performed as described above, the PM deposited on the filter 13 is burned to reduce the PM deposition amount on the filter 13. The PM deposition amount on the filter 13 after the filter regeneration is started, in other words, the PM deposition amount during the filter regeneration, is estimated by the following equation (1):

$$PMsm = PMsm + Pme - PMc \ldots (1)$$

where, PMsm (left-hand side): PM deposition amount during filter regeneration;
PMsm (right-hand side): PM deposition amount when filter regeneration is started;
PMe: PM emission amount; and
PMc: PM oxidation amount.

The PM emission amount PMe of the expression (1) denotes the amount of PM emitted from the internal combustion engine 1 to the exhaust passage 4, and is calculated based on the engine speed NE and the engine load with reference to a map prepared in advance experimentally or otherwise. The engine load as used here is the fuel injection amount Qfin from the fuel injection valve 21 during the main fuel injection. The PM oxidation amount PMc of the expression (1) denotes the amount of burned PM deposited on the filter 13, and is obtained based on the filter temperature Tf and the intake air amount GA with reference to a map prepared in advance experimentally or otherwise. The filter temperature Tf as used here is obtained based on a detection signal from the second exhaust temperature sensor 16, and the intake air amount GA is obtained based on a detection signal from the airflow meter 5.

When the PM deposition amount during the filter regeneration estimated by the equation (1) is reduced sufficiently, for example, reduced to a value that can be determined to be substantially "zero," by performing the filter regeneration, it is determined that the filter regeneration has completed to stop the post injection. With the post injection stopped in this way, the filter regeneration is terminated.

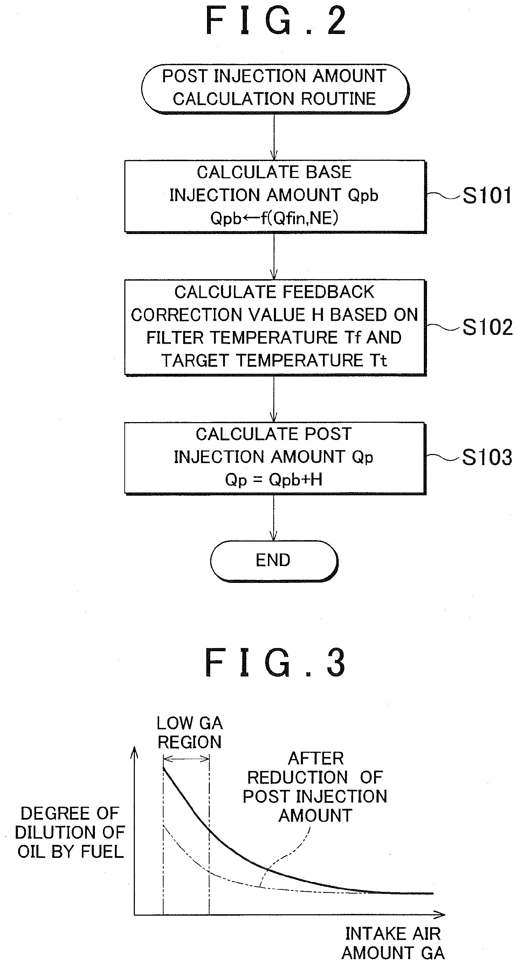

A description will be made of the procedures for calculating the post injection amount Qp for use in post injection for filter regeneration with reference to the flowchart of FIG. 2, which illustrates a post injection amount calculation routine. The post injection amount calculation routine is periodically performed by the control device 25, for example, by interruption at predetermined time intervals.

In this routine, the base injection amount Qpb is calculated (S101), the feedback correction value H is calculated (S102), and the post injection amount Qp is calculated (S103) based on the base injection amount Qpb and the feedback correction value H by the following equation (2):

$$Qp = Qpb + H \dots (2)$$

where, Qp: post injection amount;
Qpb: base injection amount; and
H: feedback correction value.

The base injection amount Qpb is a base value of the post injection amount Qp, and calculated in step S101 based on the fuel injection amount Qfin and the engine speed NE. The thus calculated base injection amount Qpb is smaller as the fuel injection amount Qfin is larger, under the condition where the engine speed NE is constant. This is because as the fuel injection amount Qfin is larger, the exhaust temperature of the internal combustion engine 1 is higher and thus the filter temperature Tf can be increased by the post injection in a smaller amount. Roughly, the base injection amount Qpb calculated as described above has a tendency to become larger as the engine speed NE is higher. This is because as the engine speed NE is higher, the time for which the exhaust gas passes through the filter 13, in other words, the time for which heat is transmitted from the exhaust gas to the filter 13, is shorter, which makes it more difficult to increase the filter temperature Tf.

The feedback correction value H is intended to correct the filter temperature Tf to the target temperature Tt by increasing and reducing the post injection amount, and calculated in step S102 according to the difference of the filter temperature Tf from the target temperature Tt to the increase or reduction side. More specifically, the feedback correction value H is smaller as the difference of the filter temperature Tf from the target temperature Tt is larger when the filter temperature Tf is higher than the target temperature Tt, and is larger as the difference of the filter temperature Tf from the target temperature Tt is larger when the filter temperature Tf is lower than the target temperature Tt. The target temperature Tt is set to a value at which the PM deposited on the filter 13 can be burned to reduce the PM deposition amount on the filter 13.

During post injection for filter regeneration, some of the fuel injected into the combustion chamber 2 is not fed to the exhaust passage 4 but adheres to a cylinder inner wall. When fuel adheres to the cylinder inner wall of the internal combustion engine 1, the fuel drops through a gap between the cylinder inner wall and a piston ring to an oil pan during reciprocation of a piston in the internal combustion engine 1. As a result, the fuel mixes with oil for lubricating the internal combustion engine 1 or the like, and the fuel with its lower viscosity dilutes the oil.

The degree of dilution of the oil by the fuel due to the post injection is affected by the intake air amount GA into the internal combustion engine 1. FIG. 3 is a graph showing changes in the degree of dilution of oil by fuel to changes in the intake air amount GA. As can be understood from the solid line of the drawing, the degree of dilution of the oil by the fuel is larger in the engine operation region where the intake air amount GA is smaller. This is because as the intake air amount GA is smaller than a predetermined value, the temperature of a gas in the combustion chamber 2 is lower, which makes it easier for the fuel injected into the combustion chamber 2 by the post injection to adhere to the cylinder inner wall.

Thus, in the engine operation region where the intake air amount GA is smaller (hereinafter referred to as "low GA region"), a larger amount of fuel injected by the post injection adheres to the cylinder inner wall, which increases the degree of dilution of the oil by the fuel. This remarkably reduces the viscosity of the oil. As a result, the internal combustion engine 1 may not be sufficiently lubricated by the oil.

Therefore, the post injection is stopped so as not to perform filter regeneration in the low GA region. In the case where there is a shift to the low GA region during the filter regeneration, however, it is preferred to complete the filter regeneration after the PM deposition amount on the filter 13 is reduced to substantially "zero," and the filter regeneration (post injection) is performed and stopped as follows. During the filter regeneration, the filter regeneration is temporarily intermitted and the post injection is stopped at a shift to the low GA region, and the filter regeneration is resumed and the post injection is performed at a subsequent shift to an engine operation region where the intake air amount GA is larger than that in the low GA region (hereinafter referred to as "high GA region"). The post injection is repetitively started and stopped until the PM deposition amount on the filter 13 becomes substantially "zero," when the filter regeneration is terminated.

FIG. 4 is a time chart showing changes in the filter temperature Tf and changes in the PM deposition amount on the filter 13 with frequent shifts of the engine operation region between the low GA region and the high GA region during filter regeneration. In the drawing, the graph g1 represents changes in the filter temperature Tf, and the graph g2 represents changes in the PM deposition amount.

As shown in the drawing, when the PM deposition amount on the filter 13 becomes a maximum allowable value or more (timing T0), filter regeneration is started and post injection is performed. While the filter regeneration is performed, the filter temperature Tf increases so that the PM deposited on the filter 13 will be burned. When the filter temperature Tf is the target temperature Tt or more, the PM deposition amount reduces.

At a shift of the engine operation region to the low GA region during the filter regeneration, the filter regeneration is intermitted and the post injection is stopped. Then, the filter temperature Tf reduces significantly to fall below the target temperature Tt, although fuel no longer adheres to the cylinder inner wall and dilution of the oil by the fuel is restricted. As a result, the reduction in the PM deposition amount on the filter 13 is stagnated. At a subsequent shift of the engine operation region to the high GA region, the filter regeneration is resumed and the post injection is performed. Then, the filter temperature Tf increases so that the PM deposited on the filter 13 will be burned again. When the filter temperature Tf is the target temperature Tt or more, the PM deposition amount reduces again.

When the filter regeneration is repetitively intermitted and resumed until the PM deposition amount on the filter 13 is reduced to a value that can be determined to be substantially "zero" (timing T1), the filter regeneration is determined to be completed and the post injection is stopped. With the post injection stopped in this way, the filter regeneration is terminated.

As the filter regeneration is intermitted and the post injection is stopped at a shift of the engine operation region to the low GA region during the filter regeneration as described above, it is prevented that a large amount of fuel injected by the post injection adheres to the cylinder inner wall, and hence that the oil for the internal combustion engine is diluted by the fuel and the viscosity of the oil is reduced. Thus, the internal combustion engine 1 can be sufficiently lubricated by the oil.

In the case where the post injection is stopped to intermit the filter regeneration at a shift of the engine operation region to the low GA region, however, a fuel component is no longer supplied to the first oxidation catalyst 11 and the second oxidation catalyst 12 by the post injection, which significantly reduces the filter temperature Tf with no oxidative reaction of a fuel component at the catalysts 11 and 12. Therefore, at a subsequent shift of the engine operation region to the high GA region, when the post injection is performed and the filter regeneration is resumed, it takes more time t1 for the filter temperature Tf to increase to the target temperature Tt at which the PM deposition amount on the filter 13 can be reduced. As a result, it takes more time from the start of the filter regeneration (T0) to the completion of the filter regeneration (T1), which delays the completion of the filter regeneration.

Therefore, in this embodiment, the post injection amount is reduced while the post injection is performed at a shift of the engine operation region to the low GA region during the filter regeneration. Further, at a shift of the engine operation region from the low GA region to the high GA region, the post injection amount having been reduced is increased to the original value.

In this case, at a shift of the engine operation region to the low GA region during the filter regeneration, the post injection amount is reduced to reduce the amount of fuel that adheres to the cylinder inner wall. As a result, dilution of oil for the internal combustion engine 1 by the fuel is restricted, with the degree of such dilution being smaller as indicated by the chain double-dashed line in FIG. 3.

In addition, under circumstances where there are frequent shifts of the engine operation region between the low GA region and the high GA region during the filter regeneration, since the post injection is not stopped but the post injection amount is reduced at a shift to the low GA region, the filter temperature Tf is not reduced significantly. Further, at a shift to the high GA region, when the filter regeneration is resumed, it takes less time to increase the filter temperature Tf to the target temperature Tt. Thus, under the circumstances discussed above, the time from the start to the completion of the filter regeneration is reduced and a delay in the completion is reduced, compared to the case where the post injection is stopped.

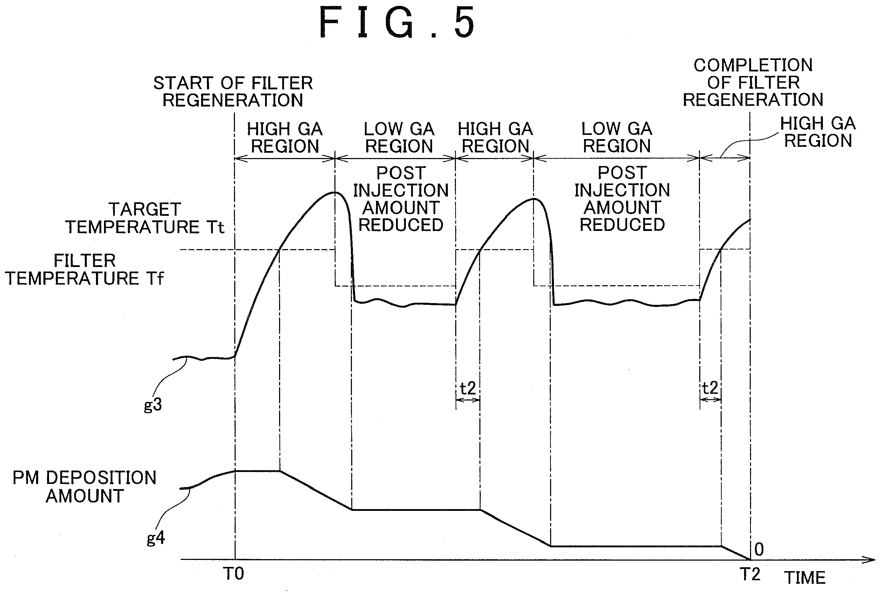

A detailed description will now be made of the transition of the filter temperature Tf and the transition of the PM deposition amount on the filter 13 with the post injection amount reduced as discussed above under circumstances where there are frequent shifts of the engine operation region between the low GA region and the high GA region during filter regeneration with reference to the time chart of FIG. 5. In the drawing, the graph g3 represents changes in the filter temperature Tf, and the graph g4 represents changes in the PM deposition amount on the filter 13.

As shown in the drawing, when the PM deposition amount becomes a maximum allowable value or more (timing T0), filter regeneration is started and post injection is performed to increase the filter temperature Tf to the target temperature Tt or more. At a shift of the engine operation region to the low GA region during the filter regeneration, the post injection is not stopped but the post injection amount is reduced, and therefore the supply of a fuel component to the first oxidation catalyst 11 and the second oxidation catalyst 12 by the post injection is not stopped. Therefore, oxidative reaction of a fuel component at the first oxidation catalyst 11 and the second oxidation catalyst 12 is continued, and the filter temperature Tf is not reduced significantly.

At a subsequent shift of the engine operation region to the high GA region, the post injection amount having been reduced is increased to the original value, and the filter temperature Tf immediately increases to the target temperature Tt or more. Thus, the time t2 required to increase the filter temperature Tf to the target temperature Tt since the shift from the low GA region to the high GA region is shorter than the time t1 indicated in FIG. 4. As a result, it takes less time from the start of the filter regeneration (T0) to the completion of the filter regeneration (T2) with the PM deposition amount being substantially "zero," which restricts a delay in the completion of the filter regeneration.

A description will now be made of specific procedures for reducing the post injection amount as discussed above. A reduction in the post injection amount is achieved by reducing the target temperature Tt. As the target temperature Tt is reduced at a shift to the low GA region during filter regeneration, the feedback correction value H calculated by the above equation (2) based on the filter temperature Tf and the target temperature Tt is smaller, because the target temperature Tt is reduced relative to the filter temperature Tf. As a result, the post injection amount Qp calculated using the equation (2) is smaller, and the post injection amount is reduced by driving the fuel injection valve 21 such that the post injection amount Qp is injected. In the high GA region, the target temperature Tt having been reduced is increased to a normal value, which stops the reduction in the post injection amount and increases the post injection amount to the original value.

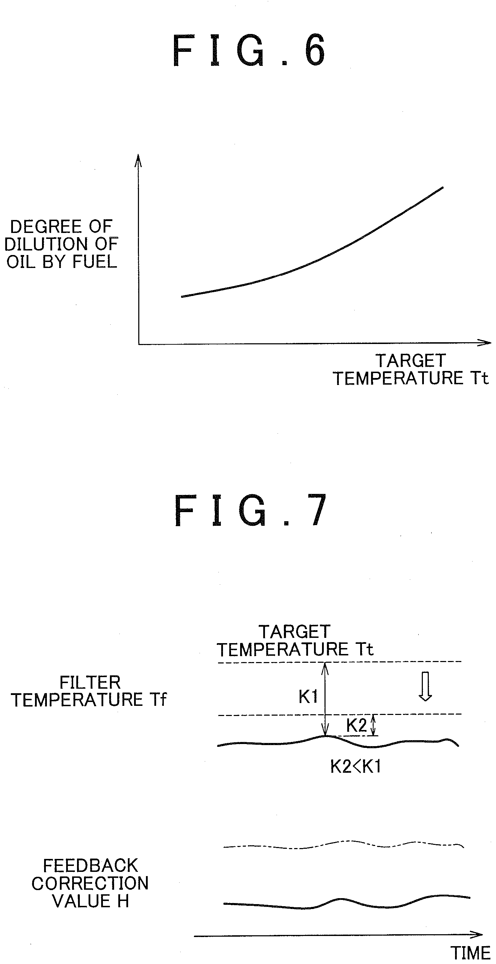

FIG. 6 is a graph showing changes in the degree of dilution of oil by fuel in the internal combustion engine 1 in the case where the target temperature Tt is gradually reduced under the condition where the engine operation region is in the low GA region during filter regeneration. As can be understood from the drawing, as the target temperature Tt is reduced, the degree of dilution of oil by fuel is smaller. This is because as the target temperature Tt is reduced, the reduction in the post injection amount is larger and thus a smaller amount of fuel injected by the post injection adheres to the cylinder inner wall. By reducing the target temperature Tt to reduce the post injection amount in this way, dilution of oil by fuel can be restricted and as a result the internal combustion engine 1 can be sufficiently lubricated by the oil.

In the low GA region, since the exhaust temperature of the internal combustion engine 1 is lower, it is more difficult to increase the filter temperature Tf by the post injection. At a shift to the low GA region during filter regeneration, the magnitude of the feedback correction value H changes according to the difference between the target temperature Tt and the filter temperature Tf. Thus, when the target temperature Tt is set to be higher, the feedback correction value H is set to be larger based on the difference K1 between the target temperature Tt and the filter temperature Tf, which is on the lower side, as shown in the upper part of FIG. 7. Even if the post injection amount is increased by an amount corresponding to the feedback correction value H, however, the increase does not contribute to an increase in the filter temperature Tf and therefore the feedback correction value H remains larger, as shown by the chain double-dashed line in the lower part of FIG. 7.

In contrast, in this embodiment, since the target temperature Tt is reduced in the low GA region as indicated by the hollow arrow in FIG. 7 and set to be smaller than that in the high GA region, the difference K2 between the target temperature Tt and the filter temperature Tf, which is on the lower side, is smaller than the difference K1. As a result, an increase in the feedback correction value H is restricted as indicated by the solid line in the lower part of FIG. 7, which prevents the correction value H from remaining larger.

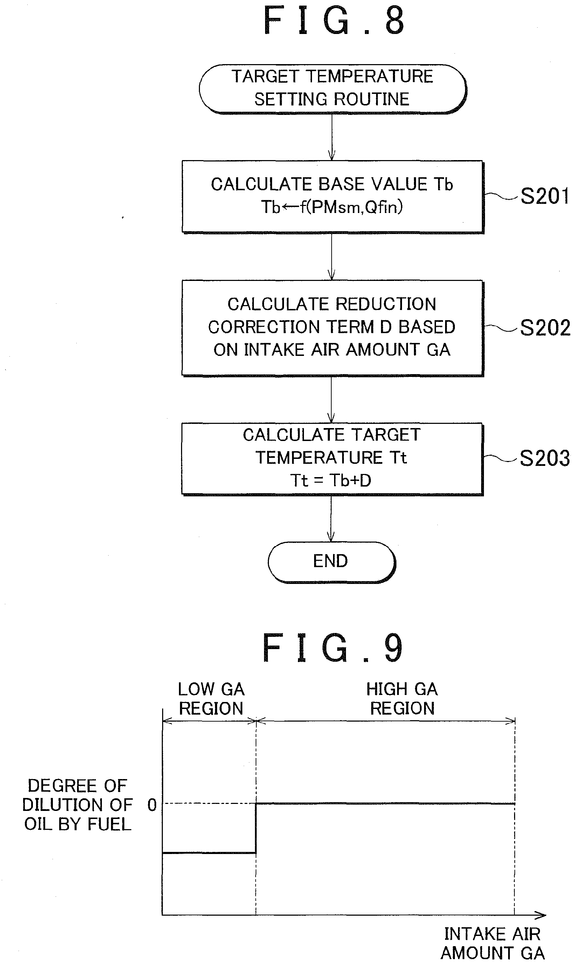

A description will now be made of specific procedures for setting the target temperature Tt with reference to the flowchart of FIG. 8, which illustrates a target temperature setting routine. The target temperature setting routine is periodically performed by the control device 25, for example, by interruption at predetermined time intervals.

In this routine, the base value Tb of the target temperature Tt is calculated (S201), the reduction correction term D for reducing the target temperature Tt is calculated (S202), and the target temperature Tt is calculated (S203) based on the base value Tb and the reduction correction term D by the following equation (3):

$$Tt = Tb + D \dots (3)$$

where, Tt: target temperature;
Tb: base value; and
D: reduction correction term.

The base value Tb is a theoretical value of the target temperature at which the PM deposited on the filter 13 can be burned to be reduced, and calculated based on the PM deposition amount PMsm and the fuel injection amount Qfin in step 201. The thus calculated base value Tb is larger as the fuel injection amount Qfin is larger, and larger as the PM deposition amount PMsm is smaller under the condition where the fuel injection amount Qfin is constant. The base value Tb has a tendency to become larger as the fuel injection amount Qfin is larger because as the fuel injection amount Qfin is larger, the exhaust temperature of the internal combustion engine 1 is higher, which makes it possible to increase the filter temperature Tf. Also, the base value Tb is larger as the PM deposition amount PMsm is smaller because as the PM deposition amount PMsm is smaller, there is less possibility of a sudden increase in the filter temperature Tf due to the combustion of the PM, which makes it easier to increase the filter temperature Tf.

The reduction correction term D is intended to reduce the target temperature Tt in order to reduce the post injection amount at a shift to the low GA region during filter regeneration, and set based on the intake air amount GA. According to an example, that does not form part of the invention and which is shown in FIG. 9, the reduction correction term D is set to a constant value smaller than "zero" in the low GA region, and set to "zero" in the high GA region where the intake air amount GA is larger than that in the low GA region.

Thus, the target temperature Tt calculated using the equation (3) is set to a value obtained by reducing an amount corresponding to the reduction correction term D in the low GA region, while such reduction is not performed in the high GA region. In the low GA region, the target temperature Tt is reduced to a value within a range where the filter temperature Tf can be maintained. That is, the value of the reduction correction term D in the low GA region is determined in advance experimentally or otherwise such that the target temperature Tt is reduced in this way.

By setting the reduction correction term D to a value that reduces the target temperature Tt to a value on the high-temperature side within the above range in the low GA region, the filter temperature Tf is easily increased to a value required to reduce the PM deposition amount at a subsequent shift to the high GA region, which is advantageous in reducing a delay in the completion of the filter regeneration. In contrast, by setting the reduction correction term D to a value that reduces the target temperature Tt to a value on the low-temperature side within the above range in the low GA region, the post injection amount is reduced to also reduce the amount of fuel that adheres to the cylinder inner wall, which is advantageous in restricting dilution of oil for the internal combustion engine 1 by the fuel.

As discussed in detail above, the following functions and effects are obtained,

(a) At a shift to the low GA region during filter regeneration, since the post injection amount is reduced to reduce the amount of fuel that adheres to the cylinder inner wall, dilution of oil for the internal combustion engine 1 by the fuel is restricted.

(b) At a shift to the low GA region during filter regeneration, since the post injection is not stopped but only the post injection amount is reduced, a significant reduction in the filter temperature Tf can be restricted. Therefore, under circumstances where there are frequent shifts of the engine operation region between the low GA region and the high GA region during the filter regeneration, the filter temperature Tf is not reduced significantly at a shift to the low GA region. Further, at a subsequent shift to the high GA region, it does not take time for the filter temperature Tf to increase to a value required to reduce the PM deposition amount (target temperature Tt). Thus, it does not take much time to reduce the PM deposition amount on the filter 13 to substantially "zero" by the filter regeneration under the circumstances discussed above, and a delay in the completion of the filter regeneration is reduced.

(c) The reduction in the post injection amount in the low GA region is achieved by reducing the target temperature Tt relative to the filter temperature Tf to reduce the feedback correction value H in the above equation (2). In the low GA region, since the exhaust temperature of the internal combustion engine 1 is lower, it is difficult to increase the filter temperature Tf by the post injection. Thus, when the target temperature Tt is set to be higher, the feedback correction value H is set to be larger based on the difference between the target temperature Tt and the filter temperature Tf, which is on the lower side. If the post injection amount is increased by an amount corresponding to the feedback correction value H, however, the increase does not contribute to an increase in the filter temperature Tf and the feedback correction value H remains larger. In the low GA region, however, since the target temperature Tt is reduced and set to be lower than that in the high GA region, the difference between the target temperature Tt and the filter temperature Tf is smaller and an increase in the feedback correction value H is restricted. Therefore, the correction value H does not remain larger.

(d) To reduce the post injection amount in the low GA region, the target temperature Tt is reduced to a value within a range where the filter temperature Tf can be maintained. Therefore, at a shift to the low GA region, the filter temperature Tf is maintained to be constant by regulating the post injection amount by increasing and reducing the feedback correction value H to bring the filter to the target temperature, so that the filter temperature Tf will not be reduced. Thus, at a subsequent shift to the high GA region, when the target temperature Tt is increased to a normal value, the filter temperature Tf can be immediately increased by the post injection to reach the target temperature Tt.

(e) The reduction in the target temperature Tt for the purpose of reducing the post injection amount is achieved by setting the reduction correction term D in the above equation (3) to a constant value smaller than "zero." This makes it easy to reduce the target temperature Tt in the low GA region by setting the reduction correction term D or the like.

According to the invention, the above example is modified as described below. The reduction correction term D is not set to a constant value that reduces the target temperature Tt to a value within a range where the filter temperature Tf can be maintained in the low GA region. That is, the reduction correction term D is set such that the target temperature Tt is reduced to a value outside the above range in the low GA region.

In reducing the target temperature Tt by an amount corresponding to the reduction correction term D to reduce the target temperature Tt to a value within the above range in the low GA region, the reduction correction term D is variably set to be smaller as the intake air amount GA is smaller. Here, since the exhaust temperature of the internal combustion engine 1 is lower as the intake air amount GA is smaller, the value of the target temperature Tt at which the filter temperature Tf can be maintained is smaller as the intake air amount GA is smaller. In addition, since the temperature of a gas in the combustion chamber 2 is lower as the intake air amount GA is smaller, the amount of fuel injected by the post injection that adheres to the cylinder inner wall is larger as the intake air amount GA is smaller. Thus, in reducing the target temperature Tt in the low GA region, variably setting the reduction correction term D as discussed above can both prevent a reduction in the filter temperature Tf and restrict adhesion of fuel to the cylinder inner wall in the most preferable state.

The present invention may be applied to an exhaust gas purification system in which an oxidation catalyst is carried on the filter 13 to increase the filter temperature Tf by an oxidative reaction of a fuel component on the filter 13. In this case, the first oxidation catalyst 11 and the second oxidation catalyst 12 may not be provided.

While some embodiments of the invention have been illustrated above, it is to be understood that the invention is not limited to details of the illustrated embodiments, but may be embodied with various changes, modifications or improvements, which may occur to those skilled in the art, without departing from the scope of the invention as defined by the claims.

**Claims**

1. An exhaust gas purification system for an internal combustion engine (1), the purification system including a filter (13) provided in an exhaust system of the internal combustion engine to trap particulate matter in an exhaust gas, the purification system being configured to perform filter regeneration by performing post injection, which is fuel injection from a fuel injection valve (21) performed after fuel injection from the fuel injection valve to a combustion chamber (2) for engine operation, to supply a fuel component to a catalyst (11,12,13) provided in the exhaust system, and burning the particulate matter deposited on the filter to remove the particulate matter utilizing oxidation heat of the fuel component at the catalyst to increase a filter temperature, comprising:
   correction means (25) for reducing a post injection amount while the post injection is performed when an intake air amount into the internal combustion engine is smaller than a predetermined value during the filter regeneration,
   wherein a feedback correction value that corrects the post injection amount to bring the filter temperature to a target temperature, is increased and reduced during the filter regeneration, **characterized in that** the correction means reduces the post injection amount by reducing the target temperature which is calculated based on a base temperature and a reduction correction term, said base temperature being a theoretical value at which the particulate matter deposited on the filter (13) can be burned and wherein the correction means variably sets the reduction correction term such that the target temperature reduces as the intake air amount reduces, when the intake air amount into the internal combustion engine is smaller than the predetermined value.

2. The exhaust gas purification system according to claim 1, wherein the filter regeneration is started when an amount of the particulate matter deposited on the filter exceeds a predetermined amount, and ends when the amount of the particulate matter deposited on the filter decreases to substantially zero.

3. The exhaust gas purification system according to claim 2 , wherein after the post injection amount is reduced, the post injection amount is increased when the intake air amount becomes larger than the predetermined value during the filter regeneration.

4. The exhaust gas purification system according to claim 3, wherein the decrease and increase in the post injection amount is repeated until the amount of the particulate matter deposited on the filter decreases to substantially zero.

**Patentansprüche**

1. Abgasreinigungssystem für einen Verbrennungsmotor (1), wobei das Reinigungssystem einen Filter (13) enthält, der in einem Abgassystem des Verbrennungsmotors vorgesehen ist, um Feststoffpartikel in einem Abgas einzufangen, wobei das Reinigungssystem so konfiguriert ist, dass es eine Filterregeneration durchführt, indem es eine Nacheinspritzung durchführt, welche eine Kraftstoffeinspritzung von einem Kraftstoffeinspritzventil (21) ist, die nach der Kraftstoffeinspritzung von dem Kraftstoffeinspritzventil in eine Brennkammer (2) für den Motorbetrieb durchgeführt wird, um einem Katalysator (11, 12, 13), der in dem Abgassystem vorgesehen ist, eine Kraftstoffkomponente zuzuführen, und indem es die auf dem Filter abgelagerten Feststoffpartikel verbrennt, um unter Nutzung der Oxidationswärme der Kraftstoffkomponente zur Erhöhung einer Filtertemperatur die Feststoffpartikel an dem Katalysator zu entfernen, mit:

> Korrekturmittel (25) zum Reduzieren einer Nacheinspritzmenge während der Durchführung der Nacheinspritzung, wenn eine Ansaugluftmenge in den Verbrennungsmotor während der Filterregeneration kleiner als ein vorbestimmter Wert ist,
> wobei ein Rückkopplungskorrekturwert, der die Nacheinspritzmenge korrigiert, um die Filtertemperatur auf eine Solltemperatur zu bringen, während der Filterregeneration erhöht und verringert wird,
> **dadurch gekennzeichnet, dass**
> das Korrekturmittel die Nacheinspritzmenge durch Verringerung der Solltemperatur verringert, die auf der Grundlage einer Basistemperatur und eines Reduktionskorrekturterms berechnet wird, wobei die Basistemperatur ein theoretischer Wert ist, bei dem die auf dem Filter (13) abgelagerten Feststoffpartikel verbrannt werden können, und wobei das Korrekturmittel den Reduktionskorrekturterm variabel so einstellt, dass die Solltemperatur mit abnehmender Ansaugluftmenge abnimmt, wenn die Ansaugluftmenge in den Verbrennungsmotor kleiner als der vorbestimmte Wert ist.

2. Abgasreinigungssystem nach Anspruch 1, wobei die Filterregeneration startet, wenn eine Menge der auf dem Filter abgelagerten Feststoffpartikel eine vorbestimmte Menge überschreitet, und endet, wenn die Menge der auf dem Filter abgelagerten Feststoffpartikel im Wesentlichen auf null abnimmt.

3. Abgasreinigungssystem nach Anspruch 2, wobei nach Verringerung der Nacheinspritzmenge die Nacheinspritzmenge erhöht wird, wenn die Ansaugluftmenge während der Filterregeneration größer als der vorgegebene Wert wird.

4. Abgasreinigungssystem nach Anspruch 3, wobei die Verringerung und Erhöhung der Nacheinspritzmenge so lange wiederholt wird, bis die Menge der auf dem Filter abgelagerten Feststoffpartikel im Wesentlichen auf null abnimmt.

**Revendications**

1. Système de purification de gaz d'échappement pour un moteur à combustion interne (1), le système de purification comprenant un filtre (13) prévu dans un système d'échappement du moteur à combustion interne pour piéger de la matière en particules dans un gaz d'échappement, le système de purification étant configuré pour réaliser une régénération de filtre en réalisant une post-injection, qui est une injection de carburant à partir d'une soupape d'injection de carburant (21) réalisée après une injection de carburant par la soupape d'injection de carburant dans une chambre de combustion (2) pour un fonctionnement de moteur, pour délivrer un composant de carburant à un catalyseur (11, 12, 13) prévu dans le système d'échappement, et en brûlant la matière en particules déposée sur le filtre pour retirer la matière en particules en utilisant la chaleur d'oxydation du composant de carburant au niveau du catalyseur pour augmenter une température de filtre, comprenant :

> des moyens de correction (25) destinés à réduire une quantité de post-injection alors que la post-injection est réalisée quand une quantité d'air d'admission dans le moteur à combustion interne est plus petite qu'une valeur prédéterminée pendant la régénération de filtre,
> une valeur de correction de rétroaction qui corrige la quantité de post-injection pour amener la température de filtre à une température de cible, étant augmentée et réduite pendant la régénération de filtre, **caractérisé en ce que** les moyens de correction réduisent la quantité de post-injection en réduisant la température de cible qui est calculée sur la base d'une température de base et d'un terme de correction de réduction, ladite température de base étant une valeur théorique à laquelle la matière en particules déposée sur le filtre (13) peut être brûlée et les moyens de correction établissent de manière variable le terme de correction de réduction de telle sorte que la température de cible diminue lorsque la quantité d'air d'admission se réduit, quand la quantité d'air d'admission dans le moteur à combustion interne est plus petite que la valeur prédéterminée.

2. Système de purification de gaz d'échappement selon la revendication 1, dans lequel la régénération de filtre est commencée quand une quantité de la matière en particules déposée sur le filtre dépasse une quantité prédéterminée, et se termine quand la quantité de la matière en particules déposée sur le filtre diminue jusqu'à sensiblement zéro.

3. Système de purification de gaz d'échappement selon la revendication 2, dans lequel, une fois que la quantité de post-injection est réduite, la quantité de post-injection est augmentée quand la quantité d'air d'admission devient plus grande que la valeur prédéterminée pendant la régénération de filtre.

4. Système de purification de gaz d'échappement selon la revendication 3, dans lequel la diminution et l'augmentation de la quantité de post-injection est répétée jusqu'à ce que la quantité de la matière en particules déposée sur le filtre diminue jusqu'à sensiblement zéro.

# FIG.1

# FIG.2

```
┌──────────────────────────┐
│  POST INJECTION AMOUNT   │
│   CALCULATION ROUTINE    │
└──────────────────────────┘
              │
              ▼
┌──────────────────────────┐
│    CALCULATE BASE        │
│  INJECTION AMOUNT Qpb    │ ～S101
│    Qpb←f(Qfin,NE)        │
└──────────────────────────┘
              │
              ▼
┌──────────────────────────┐
│    CALCULATE FEEDBACK    │
│ CORRECTION VALUE H BASED ON │ ～S102
│   FILTER TEMPERATURE Tf AND │
│    TARGET TEMPERATURE Tt  │
└──────────────────────────┘
              │
              ▼
┌──────────────────────────┐
│    CALCULATE POST        │
│  INJECTION AMOUNT Qp     │ ～S103
│      Qp = Qpb+H          │
└──────────────────────────┘
              │
              ▼
         ┌─────────┐
         │   END   │
         └─────────┘
```

# FIG.3

# F I G . 4

EP 1 925 799 B1

# FIG.5

START OF FILTER
REGENERATION

COMPLETION
OF FILTER
REGENERATION

HIGH GA
REGION

LOW GA
REGION

HIGH GA
REGION

LOW GA
REGION

HIGH GA
REGION

POST
INJECTION
AMOUNT
REDUCED

POST
INJECTION
AMOUNT
REDUCED

TARGET
TEMPERATURE Tt

FILTER
TEMPERATURE Tf

g3

t2

t2

PM DEPOSITION
AMOUNT

g4

0

T0

T2    TIME

EP 1 925 799 B1

# FIG.6

DEGREE OF
DILUTION OF
OIL BY FUEL

TARGET
TEMPERATURE Tt

# FIG.7

TARGET
TEMPERATURE Tt

FILTER
TEMPERATURE Tf

K1

K2

K2<K1

FEEDBACK
CORRECTION
VALUE H

TIME

# F I G . 8

```
┌─────────────────────────────┐
│    TARGET TEMPERATURE       │
│      SETTING ROUTINE        │
└─────────────────────────────┘
              │
              ▼
┌─────────────────────────────┐
│   CALCULATE BASE VALUE Tb   │      S201
│      Tb←f(PMsm,Qfin)        │
└─────────────────────────────┘
              │
              ▼
┌─────────────────────────────┐
│    CALCULATE REDUCTION      │
│  CORRECTION TERM D BASED    │      S202
│   ON INTAKE AIR AMOUNT GA   │
└─────────────────────────────┘
              │
              ▼
┌─────────────────────────────┐
│     CALCULATE TARGET        │
│     TEMPERATURE Tt          │      S203
│        Tt = Tb+D            │
└─────────────────────────────┘
              │
              ▼
         ┌─────────┐
         │   END   │
         └─────────┘
```

# F I G . 9

LOW GA        HIGH GA
REGION       REGION

DEGREE OF
DILUTION OF  0
OIL BY FUEL

INTAKE AIR
AMOUNT GA

18

**EP 1 925 799 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004044403 A
- EP 1380742 A1
- EP 1437497 A1
- FR 2879254 A1